# EUROPEAN PATENT SPECIFICATION

(11) **EP 0 636 902 B1**
(45) Date of publication and mention of the grant of the patent: **19.05.1999**
(21) Application number: 94830383.9
(22) Date of filing: 26.07.1994
(51) Int. Cl.: G01S 17/87, G01S 17/74, G01S 13/74

(54) **Method for determining the position of a mobile vehicle within a limited area and device embodying said method**
Verfahren zum Bestimmen des Ortes eines sich bewegenden Fahrzeuges in einem begrenzten Raum und Vorrichtung zur Durchführung dieses Verfahrens
Procédé pour la détermination de la position d'un véhicule mobile dans une zone limitée et dispositif pour la mise en oeuvre de ce procédé

(30) Priority: 29.07.1993 IT MI931708
(43) Date of publication of application: 01.02.1995
(73) Proprietor: Zaccaria, Renato, Genova (IT); Morasso, Pietro, Genova (IT)
(72) Inventor: Zaccaria, Renato, Genova (IT); Morasso, Pietro, Genova (IT)
(74) Representative: Adorno, Silvano

(56) References cited:
- EP-A- 0 185 816
- EP-A- 0 341 890
- US-A- 4 837 575

## Description

The present invention concerns methods for determining the position of mobile vehicles and in particular a method, and a relevant device, for determining the position of mobile vehicles within a limited area.

It is known that bearing devices (GPS, Loran, etc.) are used for air, sea and land navigation which allow the determination of the vehicle position with a maximum precision of about 10-15 metres. This precision is amply sufficient for travels over kilometres but absolutely inadequate for operations in small and/or crowded environments.

This kind of operations in environments which are closed or however of limited size is mainly applied in the industry and services for the movements of items of various types and/or the inspection of environments by means of automatic trucks or mobile robots, globally called AGV (Automatic Guidance Vehicles). The operating areas of said AGVs may be buildings, also on various floors, or open spaces of limited size. Most of the problems concerning the AGVs (control, safety and obstacle avoidance, autonomy, etc.) have already been solved but their application in the different fields, especially outside the industry, is still limited due to the unsatisfying methods for determining the position.

A first method used in the industry is the use of magnetic tracks built in the floor. This method assures a great precision but has two great drawbacks. First of all it is very onerous from an economical point of view, since it requires a serious intervention on the operation environment. Moreover, it does not allow any operating flexibility because the paths are fixed, so that the vehicles can not move out of the predetermined paths.

A second method used in robotics is the odometric method, i.e. the integration of the paths of the wheels or of the motion revolving members. However, the application of said method is limited to areas with a maximum size in the tens of metres, beyond which the odometric calculation of the position has a greatly insufficient precision.

In order to increase the precision of said method, absolute reference points detected by means of electromagnetic (radio, laser, visual) or magnetic signals are employed. These reference points may consist in bar codes, light sources, magnetic tracks, etc. However, this method has the drawback that the detection takes place only periodically and is subjected to environmental interferences caused, for example, by the light conditions, the reading distance, the electromagnetic pollution, interposed obstacles, etc. A further drawback of the odometric method, be it completed or not by the detection of absolute reference points, is its applicability to means moving through motion revolving members. In the case of robots provided with articulated motion means ("legs"), towards which this field is evolving, said method is completely inapplicable.

An example of a system employing a combination of odometric measurements and detection of reference points by a scanning laser beam is disclosed in EP-A-0341890, wherein said reference points are common striped boards provided with a reflecting surface. The technical problem solved by this system is that of providing a workable system over a large area without using uniquely-coded reflectors, but rather dividing the area into sub-areas where duplicate codes can be used. This is achieved by integrating the data obtained from the reflectors with an odometric measurement which defines the sub-area where the vehicle is currently positioned. Such a system clearly has a limit to the distance over which the laser beam can be projected and still result in a readable reflection, in addition to the restriction to vehicles which can perform an odometric measurement.

Therefore, an object of the present invention is to provide a method for determining the position which overcomes the above-mentioned drawbacks.

A further object of the present invention is to provide a device embodying said method.

These objects are achieved by means of a method having the characteristics cited in claim 1 and of the relevant device having the characteristics cited in claim 3.

A first advantage of the method according to the present invention consists in the capability of determining the position with a great precision (of about 10 cm or less) in any point of the operation area.

A second advantage is the greater immunity from environmental disturbances even at a greater distance from the absolute reference points.

These and other advantages and characteristics of the method according to the present invention and of the device embodying it will be apparent from the following detailed description of a preferred embodiment thereof, reported as a non-limiting example, referring to the annexed drawings wherein:
Fig.1 is a schematic view showing the essential members of a first element of the device according to the present invention;
Fig.2 is a schematic view showing the members of a second element of the above-cited device;
Fig.3 is a schematic view showing the members of a more complete embodiment of the first element of fig.1; and
Fig.4 is a schematic view showing the operation of the device.

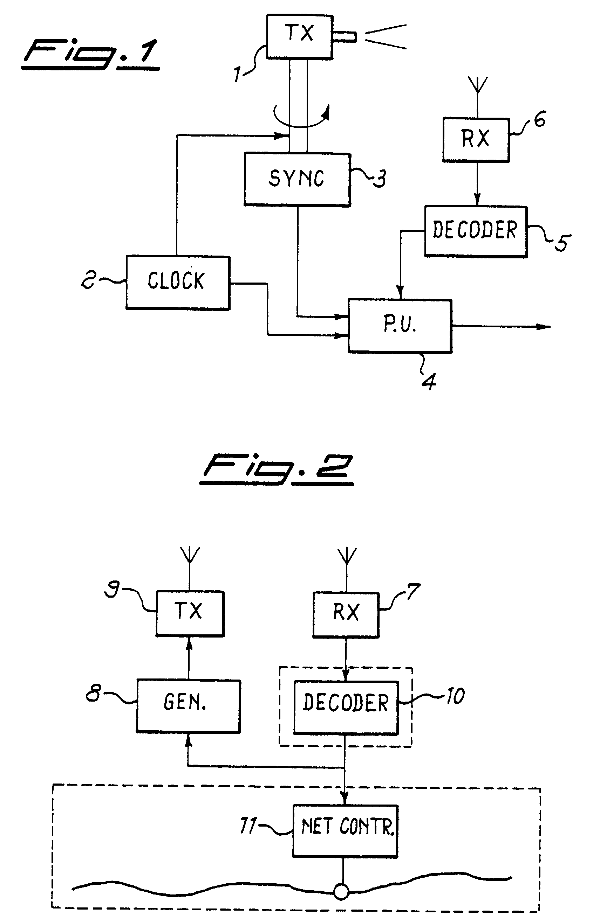

Referring to fig.1, there is seen that a first element, located on board the vehicle and called localizer hereafter, essentially includes the following members: a transmitter 1, revolving in an essentially horizontal plane, whose revolution is precisely controlled by a clock 2, e.g. a quartz clock, and detected by a synchronizer 3, at least in one point. Both members 2 and 3 supply a signal to a processing unit 4, which receives a further signal from a decoder 5 receiving the signal picked up by a receiver 6. The group of data supplied to unit 4 allows it to provide as an output the position of the vehicle on which the localizer shown in fig.1 is mounted, as it will be explained further on.

With reference to fig.2, there is seen a second element of the device, fixed on the perimeter of the operation area and called active reflector hereafter, essentially including the following members: a receiver 7 connected to a signal generator 8 provided with a transmitter 9. In general, a decoder 10 will also be present between members 7 and 8. If needed, said decoder 10 can send out a signal also to a net controller 11 connecting it to a local area network (LAN) for the purpose which will be made clear later on.

In order to illustrate the method according to the present invention and the operation of the relevant device, reference will be made at first to the case of a single vehicle, provided with a localizer, moving inside an area along whose perimeter a plurality of active reflectors is arranged.

The revolving transmitter 1 emits a continuous electromagnetic signal which can range from radio waves, to infrared and visible light. This signal is of the directional type, having a beam width limited both in the horizontal and vertical directions. The revolving speed of transmitter 1 defines the frequency of calculation of the vehicle position, and therefore may be adapted to the operating conditions and first of all to the travel speed.

There is considered, merely as an example, the emission of a laser beam, in the visible or infrared band, with a horizontal width ≤1°, a vertical width between 1° and 5°, and a revolving speed of 1 rev/sec, simply obtained by mechanically revolving transmitter 1 at a constant speed. Consequently, the laser beam emitted by the localizer sweeps the whole horizon at every second and during the revolution hits the receivers 7 (in this case photodetectors) of the active reflectors which are within the field of vision. Since the beam has a limited vertical width, it is obvious that the height of transmitter 1 must be near to that of receivers 7. Otherwise, to be sure that the beam hits the receiver, very large receivers or high power lasers would be required, so as to emit beams with a great vertical width yet retaining a power per unit surface sufficient to activate the receiver. Obviously, both solutions are undesirable, in particular the use of powerful lasers in environments wherein also human beings may be present.

When receiver 7 picks up the passage of the laser beam emitted by transmitter 1, it sends an impulse to the signal generator 8 so that the latter emits a reply signal by means of transmitter 9. This signal emitted by the active reflector is not of the directional type but diffused, and it contains a code which unambiguously identifies the source of emission, i.e. it contains the "name" of the reflector. The duration of the signal is very short, in the range of some ms, but sufficient to modulate the reflector's code and an error detection/correction code. Receiver 6 located on the vehicle picks up the signal emitted by the reflector and identifies the activated reflector by means of decoder 5, and then supplies said information to the processing unit 4. When said information is received by processor 4, it is combined with the time indicated by clock 2 and the reference point along the revolution obtained from synchronizer 3, so as to convert the time into an angle with respect to the vehicle axis.

Since the distance between the vehicle and the reflector is always small, not more than some tens of metres, the time of propagation of the activating and reply signals is absolutely negligible, while the reply lag of the reflector is constant and known. In this way, at each revolution processor 4 receives the information about the angles under which the active reflectors located in the field of vision are seen. Therefore, it can perform a triangulation, usually on redundant data, for precisely determining the vehicle position on the base of the map of said reflectors contained in its memory. For example, if the reference point from synchronizer 3 coincides with the 0° direction and clock 2 indicates 0.25 seconds, this means that the reply signal arrived from the 90° direction, i.e. orthogonally to the right of the vehicle (at a revolving speed of 1 rev/sec), not considering the reflector reply lag. In case the vehicle is not moving at least three of these replies have to be combined in order to calculate the position, while if the vehicle is moving more replies are needed and a lower precision is achieved.

It is clear that by properly distributing the active reflectors along the perimeter of the operation area, the localizer will always have enough active reflectors in its field of vision to obtain a sufficient amount of data for determining the position, even in the presence of disturbances preventing the activation of some reflectors and/or the reception of some replies. Moreover, the "active" reply of the reflector allows the operation also at a distance greater than that allowed by the mere "passive" reading of the reference points.

The above-described embodiment is clearly just an example susceptible of various modifications. The mechanical apparatus for revolving transmitter 1 may be replaced, for example, by an electromagnetic apparatus which varies the signal direction of emission. The revolving speed of transmitter 1 is not necessarily constant, though this increases the precision. For example, it could be adapted to the travel speed of the vehicle so as to carry out the position calculation at constant travel intervals. Moreover, a further member may be provided suitable to break off the supply to transmitter 1 during the vehicle stops so as to increase the endurance thereof. The precision of the apparatus may be further increased by detecting with a higher frequency the position of the revolving transmitter 1 by means of a synchronizer 3 which carries out, for example, four detections at each revolution, or even by continuously detecting it directly from the revolving mechanism.

As far as the kind of signal used for communicating between the localizer and the reflectors is concerned, a laser beam is preferably employed because it has a frequency higher than a radio signal thus obtaining a "cleaner" signal, less subject to interferences by electronic apparatuses and the like, which can be modulated at a higher frequency, therefore in a shorter time. However, also signals in the band of radio waves or visible light can be employed, and the reply signal of the reflector is not necessarily of the same kind of the localizer signal which activated it. In fact, it is clear that the important thing is the compatibility between the two transmitter/receiver pairs 1/7 and 9/6 which exchange signals. Ultrasonic signals do not produce satisfying results, for their greater slowness and the poor propagation characteristics.

The limited horizontal width is useful to achieve a greater precision, in that a vertical "blade" having an horizontal width or 1° or less allows an exact determination of the time at which receiver 7 of the reflector is hit by the signal from the localizer. The lower limit of the beam horizontal width is given by the combination with the revolving speed of transmitter 1, since the time of passage across the receiver must be sufficient for the latter to read the signal.

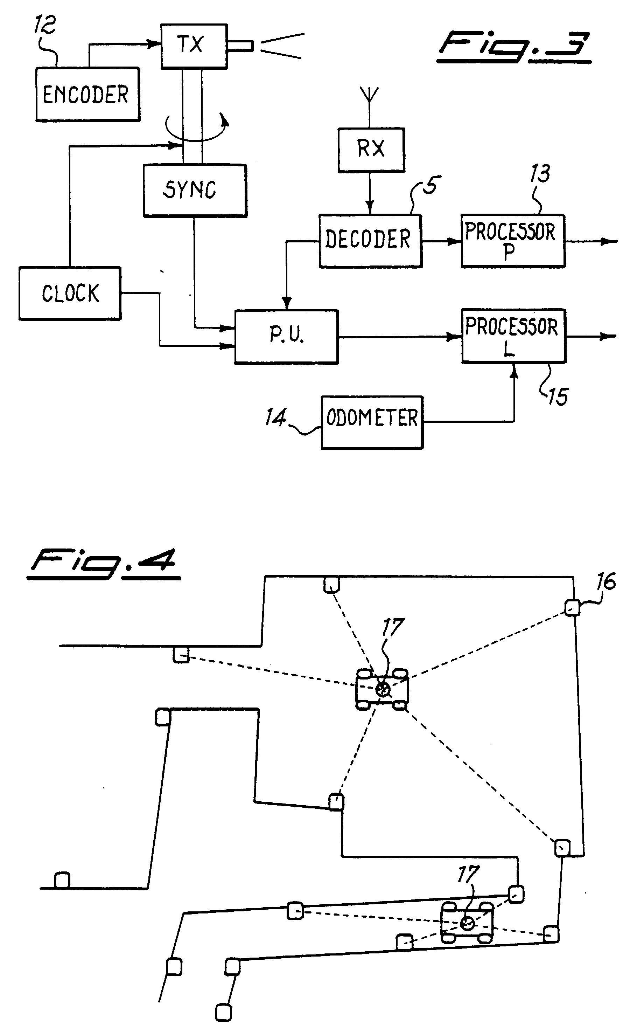

Referring now to fig.3, there is shown a localizer for operating in the presence of a plurality of vehicles simultaneously moving in the same operation area. This version of the localizer includes an encoder 12 which allows the modulation of the signal emitted by transmitter 1 so that said signal also contains the code of the emitting vehicle, in addition to the error detection/correction code as in the case of the signal emitted by the reflector. For these operations with a plurality of vehicles, the active reflectors are provided with a decoder 10 (fig.2), as mentioned above, which decodes the localizer code in the signal picked up by receiver 7. This information is supplied to generator 8 so that the reflector emits a reply signal containing not only its own identification code but also the code of the localizer which activated it. In this way, when the diffused signal emitted by the reflector is picked up by all localizers present within its range, each localizer can ascertain, still by means of decoder 5, whether the picked reply concerns one of its signals or that of another localizer. Decoder 5 can also verify the overlap of signals in the very rare cases, thanks to the duration of the reflector reply, in which two reflectors simultaneously have been activated and have replied to two different localizers. In such an instance, the signal will be simply neglected and not used for determining the position.

The signals received by a localizer but concerning other vehicles may be simply ignored, or they can be used for determining the position of the other vehicles present in the same area by means of a specific processor 13. However, this determination of the other positions is obtained with a rougher approximation, since the localizer does not have precise information about the revolving speed of the other transmitters and the movements of the other vehicles.

As mentioned above, in the case in which an overall view of the positions of the vehicles operating in a certain area is required, each active reflector located along the perimeter of said area can be provided with a net controller 11 (fig.2) which connects it to a local network. By gathering the data from the various reflectors with the localizers' codes and the activation times, a central processor can obtain the map of the positions of the various vehicles, with a certain approximation in this case too.

In order to increase further the precision and in the cases wherein this is possible, the localizer can also employ the data coming from an odometer 14, which are processed into a processor 15 in combination with the output of processor 4. In this way, the best estimate of the position is obtained, even in case of scarce or redundant information. In fact, the presence of odometer 14 allows a useful exploitation of only two or even one reply. Odometer 14 provides a further advantage in the initial setting up in case the localizer already has a map of the operation environment. In fact, in such a case it is possible to perform the self-calibration of the device instead of supplying the map of the reflectors obtained through an expensive and delicate survey procedure for determining the position of said reflectors. In practice, the vehicle carries out initial exploration movements in which the odometry is capable of providing very precise data which can be extrapolated, e.g. along a straight line, and the map of the positions of the reflectors is calculated on the basis of these data.

Finally, fig.4 schematically shows how an adequate distribution of active reflectors 16 allows each localizer 17 to have always three to five of them in its field of vision, even in operation areas having a shape much more complicated than a simple rectangular room.

As far as the supply of the localizer is concerned, clearly it exploits the energy source of the vehicle whereon it is mounted. In general, said energy source consists in batteries which make the vehicle completely independent from the environment wherein it moves. Also the active reflectors may be supplied by batteries, or they may be directly connected to the electrical network, especially if they are connected to a local network.

## Claims

1. A method for determining the position of a mobile vehicle within a limited area including the distribution of fixed reference points along the perimeter of said area and the exploration of said perimeter by said vehicle by means of a directional electromagnetic signal suitable to sweep said fixed reference points, characterized in that it further includes the detection of the sweeping signal, the generation and the emission of a very short identification signal by said reference points in reply to the sweeping by the vehicle, the decoding of said identification signal by the vehicle, and its processing together with the data on the direction of emission of the exploring signal, said exploration being carried out on the whole horizon, preferably at a constant speed.

2. A method according to claim 1, characterized in that the exploration is carried out with a signal containing also the identification code of the exploring vehicle and the reference point generates a reply signal containing both said code and its own identification code.

3. A device for determining the position of a mobile vehicle within a limited area, comprising a first element, located on board the vehicle, including a directional transmitter (1) revolving in a substantially horizontal plane and suitable to emit a continuous electromagnetic signal, members for detecting the angle of emission of said signal, a decoder (5) suitable to decode the signals picked up by a receiver (6), and a processing unit (4) which receives the signals from said members for detecting the angle of emission and said decoder (5), as well as a plurality of second elements, fixed along the perimeter of said area, characterized in that each of said second elements includes a receiver (7) suitable to pick up the signal emitted by said transmitter (1) and to transmit said picking to a generator (8) suitable to generate a signal containing an identification code, said signal being diffusely emitted by a transmitter (9) of the second element in such a way as to be picked up by said receiver (6) of the first element.

4. A device according to claim 3, characterized in that the members for detecting the angle of emission consist in a clock (2) controlling the revolution of the transmitter (1), and a synchronizer (3) suitable to detect the position of said transmitter (1) at least once during each revolution.

5. A device according to claim 3 or 4, characterized in that the first element also includes an encoder (12) suitable to introduce an identification code into the signal emitted by the transmitter (1), and each of the second elements also includes a decoder (10) suitable to decode said vehicle identification code and to transmit it to the generator (8), whereby it is inserted in the reply signal emitted by the transmitter (9).

6. A device according to claim 5, characterized in that each of the second elements also includes a net controller (11) suitable to receive the output data from the decoder (10) and to transmit them to a central processor through a local area network connecting said second elements.

7. A device according to claim 5 or 6, characterized in that the first element also includes an odometer (14) whose information is combined in a processor (15) with the output of the processing unit (4).

8. A device according to one of the claims 5 to 7, characterized in that the first element also includes a processor (13) suitable to process the reply signals concerning other vehicles which it receives from the decoder (5).

9. A device according to one of the claims 5 to 8, characterized in that the signal emitted by the transmitter (1) is a laser beam, preferably in the infrared band.

10. A device according to claim 9, characterized in that the laser beam has a maximum horizontal width of 1° and a vertical width between 1° and 5°, preferably 3°.

## Patentansprüche

1. Verfahren zum Bestimmen der Position eines sich bewegenden Fahrzeugs in einem begrenzten Raum, mit dem Verteilen von feststehenden Referenzpunkten entlang der Begrenzung dieses Raumes und dem Untersuchen dieser Begrenzung durch das Fahrzeug mittels eines gerichteten elektromagnetischen Signals, das geeignet ist, die feststehenden Referenzpunkte abzutasten, dadurch gekennzeichnet, daß es außerdem das Erfassen des Abtastsignals, das Erzeugen und Aussenden eines sehr kurzen Identifikationssignal durch die Referenzpunkte in Beantwortung des Abtastens durch das Fahrzeug, das Dekodieren des Identifikationssignals durch das Fahrzeug und das Verarbeiten davon zusammen mit den Daten bezüglich der Richtung des Aussendens des Untersuchungssignals umfaßt, wobei das Untersuchen über den gesamten Horizont durchgeführt wird, vorzugsweise mit einer konstanten Geschwindigkeit.

2. Verfahren nach Anspruch 1, dadurch gekennzeichnet, daß das Untersuchen mit einem Signal durchgeführt wird, das außerdem den Identifikationscode des untersuchenden Fahrzeugs enthält, und der Referenzpunkt ein Anwortsignal erzeugt, das sowohl diesen Code als auch seinen eigenen Identifikationscode enthält.

3. Vorrichtung zum Bestimmen der Position eines sich bewegenden Fahrzeugs innerhalb eines begrenzten Raumes, mit einem ersten Element, das an Bord des Fahrzeugs angeordnet ist, das einen Richtungssender (1), der in einer im wesentlichen horizontalen Ebene kreist und geeignet ist, ein kontinuierliches, elektromagnetisches Signal auszusenden, Bauteile zum Erfassen des Winkel des Aussendens des Signals, einen Dekodierer (5), der geeignet ist, die Signale zu dekodieren, die von einem Empfänger (6) aufgefangen werden, und eine Verarbeitungseinheit (4) enthält, die die Signale von den Bauteilen, um den Winkel des Aussendens zu erfassen, und dem Dekodierer (5) empfängt, und einer Anzahl von zweiten Elementen, die entlang der Begrenzung des Raumes feststehend sind, dadurch gekennzeichnet, daß jedes der zweiten Elemente einen Empfänger (7) enthält, der geeignet ist, das Signal aufzufangen, das von Sender (1) ausgesendet wird, und das aufgefangene Signal einen Generator (8) zuzuführen, der geeignet ist, ein Signal zu erzeugen, das einen Identifikationscode enthält, das Signal vom einen Sender (9) des zweiten Elementes auf eine solche Weise diffus ausgesendet wird, um von Empfänger (6) des ersten Elementes aufgefangen zu werden.

4. Vorrichtung nach 3, dadurch gekennzeichnet, daß die Bauteile zum Erfassen des Winkels des Ausssendens eine Uhr (2), durch die die des Senders (1) gesteuert wird, und eine Synchronisationseinrichtung (3) aufweisen, die geeignet ist, die Position des Senders (1) zumindest einmal bei jeder Umdrehung zu erfassen.

5. Vorrichtung nach Anspruch 3 oder 4, dadurch gekennzeichnet, daß das erste Element außerdem einen Kodierer (12) enthält, der geeignet ist, einen Identifikationscode in das Signal einzufügen, das von dem Sender (1) ausgesendet wird, und jedes der zweiten Elemente außerdem ein Dekodierer (10) enthält, der geeignet ist, den Fahrzeug-Identifikationscode zu dekodieren und ihn dem Generator (8) zuzuführen, wodurch er in das Antwortsignal eingefügt wird, das von dem Sender (9) ausgesendet wird.

6. Vorrichtung nach Anspruch 5, dadurch gekennzeichnet, daß jedes der zweiten Elemente außerdem eine Netzsteuerung (11) enthält, die geeignet ist, die Ausgangsdaten von dem Dekodierer (10) zu empfangen und diese über ein lokales Raum-Netzwerk, durch welches die zweiten Elemente miteinander verbunden sind, zu einem Zentralprozessor zu übertragen.

7. Vorrichtung nach Anspruch 5 oder 6, dadurch gekennzeichnet, daß das erste Element außerdem ein Wegstreckenzähler (14) enthält, dessen Information in einem Prozessor (15) mit der Ausgabe von der Verarbeitungseinheit (4) kombiniert wird.

8. Vorrichtung nach einem der Ansprüche 5 bis 7, dadurch gekennzeichnet, daß das erste Element außerdem einen Prozessor (13) enthält, der geeignet ist, die Antwortsignale, zu verarbeiten, die andere Fahrzeuge betreffen, die er von dem Dekodierer (5) empfängt.

9. Vorrichtung nach einem der Ansprüche 5 bis 8, dadurch gekennzeichnet, daß das Signal, das von dem Sender (1) ausgesendet wird, ein Laserstrahl ist, vorzugsweise im Infrarot-Bereich.

10. Vorrichtung nach Anspruch 9, dadurch gekennzeichnet, daß der Laserstrahl eine maximale horizontale Breite von 1° und eine vertikale Breite zwischen 1° und 5° hat, vorzugsweise 3°.

## Revendications

1. Procédé pour déterminer la position d'un véhicule mobile dans une zone limitée comprenant la distribution de points de référence fixes le long du périmètre de ladite zone et l'exploration dudit périmètre par ledit véhicule au moyen d'un signal électromagnétique directionnel adapté à balayer lesdits points de référence fixes, caractérisé en ce qu'il comprend en outre la détection du signal de balayage, la génération et l'émission d'un signal d'identification très court par lesdits points de référence en réponse au balayage par le véhicule, le décodage dudit signal d'identification par le véhicule, et son traitement ensemble avec les données sur la direction d'émission du signal explorant, ladite exploration étant réalisée sur l'ensemble de l'horizon, de préférence à une vitesse constante.

2. Procédé selon la revendication 1, caractérisé en ce que l'exploration est réalisée avec un signal contenant également le code d'identification du véhicule explorant et le point de référence génère un signal de réponse contenant à la fois ledit code et son propre code d'identification.

3. Dispositif pour déterminer la position d'un véhicule mobile dans une zone limitée, comprenant un premier élément, situé à bord du véhicule comprenant un transmetteur directionnel (1) tournant dans un plan sensiblement horizontal et approprié à émettre un signal électromagnétique continu, des éléments pour détecter l'angle d'émission dudit signal, un décodeur (5) approprié pour décoder les signaux reçus par un récepteur (6), et une unité de traitement (4) qui reçoit les signaux issus desdits éléments pour détecter l'angle d'émission et dudit décodeur (5), ainsi qu'une pluralité de seconds éléments fixés le long du périmètre de ladite zone, caractérisé en ce que chacun desdits seconds éléments comprend un récepteur (7) approprié à recevoir le signal émis par ledit transmetteur (1) et à transmettre ladite réception à un générateur (8) approprié pour générer un signal contenant un code d'identification, ledit signal étant émis de manière diffuse par un transmetteur (9) du second élément d'une manière telle à être reçue par ledit récepteur (6) du premier élément.

4. Dispositif selon la revendication 3, caractérisé en ce que les éléments pour détecter l'angle d'émission comprennent une horloge (2) contrôlant la rotation du transmetteur (1) et un synchronisateur (3) adapté à détecter la position dudit transmetteur (1) au moins une fois à chaque révolution.

5. Dispositif selon la revendication 3 ou 4, caractérisé en ce que le premier élément comprend également un encodeur (12) adapté à introduire un code d'identification dans le signal émis dans le transmetteur (1), et chacun des seconds éléments comprend également un décodeur (10) adapté à décoder ledit code d'identification du véhicule et à le transmettre au générateur (8), de sorte qu'il est inséré dans le signal de réponse émis par le transmetteur (9).

6. Dispositif selon la revendication 5, caractérisé en ce que chacun des seconds éléments comprend également un contrôleur de réseau (11) adapté à recevoir les données de sortie issues du décodeur (10) et à les transmettre à un processeur central à travers un réseau local connectant lesdits seconds éléments.

7. Dispositif selon la revendication 5 ou 6, caractérisé en ce que le premier élément comprend également un odomètre (14) dont l'information est combinée dans un processeur (15) avec la sortie de l'unité de traitement (4).

8. Dispositif selon l'une quelconque des revendications 5 à 7, caractérisé en ce que le premier élément comprend un processeur (13) adapté à traiter les signaux de réponse concernant d'autres véhicules qui les reçoit à partir du décodeur (5).

9. Dispositif selon l'une des revendications 5 à 8, caractérisé en ce que le signal émis par le transmetteur (1) est un faisceau laser, de préférence dans la bande infrarouge.

10. Dispositif selon la revendication 9, caractérisé en ce que le faisceau laser a une largeur horizontale maximale de 1° et une largeur verticale située entre 1° et 5° de préférence 3°.
